# EUROPEAN PATENT SPECIFICATION

(11) **EP 1 500 260 B1**
(45) Date of publication and mention of the grant of the patent: **19.11.2008**
(21) Application number: 03706840.0
(22) Date of filing: 19.03.2003
(51) Int. Cl.: H04N 5/00, H04N 7/24, H04N 7/173

(54) **DOWNLOADING OF PROGRAMS INTO BROADCAST-RECEIVERS**
HERUNTERLADEN VON PROGRAMMEN IN RUNDFUNKEMPFAENGER
TELECHARGEMENT DE PROGRAMMES DANS DES RECEPTEURS DE RADIODIFFUSION

(30) Priority: 12.04.2002 EP 02076490
(43) Date of publication of application: 26.01.2005
(73) Proprietor: Koninklijke Philips Electronics N.V., 5621 BA Eindhoven (NL)
(72) Inventor: WEI, Yumin, NL-5656 AA Eindhoven (NL)
(74) Representative: Gravendeel, Cornelis
(86) International application number: PCT/IB2003/001016
(87) International publication number: WO 2003/088645

(56) References cited:
- WO-A-00/27114
- WO-A-00/30345
- WO-A-01/65850
- WO-A-01/84841
- SUN MICROSYSTEMS ET AL: "Java TV API Specification" SUN MICROSYSTEMS, 14 June 1999 (1999-06-14), pages 1-27, XP002143725 Palo Alto Retrieved from the Internet: <URL:http://java.sun.com/products/javatv/j avatvspec0_9_0.html> [retrieved on 2000-07-27]

## Description

### FIELD OF THE INVENTION

The invention relates to a method of downloading a program into a broadcast receiver (hereinafter "Xlet") that is executable by the broadcast receiver, where the Xlet is broadcast via a service of a transport stream.

### BACKGROUND OF THE INVENTION

Increasingly digital audio/video transmission systems are used for broadcasting audio/video channels. Taking the DVB (Digital Video Broadcasting) system as an example, a network provider broadcasts a number of transport streams, each containing a number of services. Usually, the transport streams are transmitted in distinct frequency bands (frequency multiplexing), whereas the services are coded into the stream using time multiplexing. A service is usually referred to as a channel. A receiver includes a tuner for tuning to a specific transport stream and a decoder for extracting a specific service/channel from the stream. In DVB, the transport streams are MPEG-2 transport streams. The network is defined as the collection of MPEG-2 transport stream multiplexes transmitted via a single delivery system. For certain delivery systems, such as a satellite delivery system, there can be more than one network. Consequently, a channel is identified by a network_id identifying the network, a transport_id identifying the stream within the network, and a service_id identifying the service/channel within the stream. A service can include one or more service components (mono-media components). Major service component types are a video stream and an audio stream. It is expected that also the service component type "program" will become more important. With "program" is meant code that is executable by the broadcast receiver. In principle, the code could be directly executable code for the processor of the receiver. However, since systems are becoming more open, it is preferred that the code is independent of the specific implementation of the receiver. This may be achieved by using interpretable code, such as a Java application (also referred to as applet). For specific platforms, virtual Java machines have been defined enabling the development of Java applications for the platform. An example of this is the MHP (Multimedia Home Platform) Java virtual machine that enables the development of Java applets for MHP compliant devices, such as set top boxes. Such Java applets are referred to as Xlets.

At this moment, only few Xlets are available for downloading. Most of those Xlets provide enhanced functionality for a channel. Those Xlets are mainly static in the sense that they do not change frequently. A user has to scan through all available channels to determine whether an Xlet for that channel/service is available. For DVB/MHP, the so-called Program Map Table (PMT) indicates the transport streams that contain an Application Information table (AIT) and the location of the transport stream(s) that transport the application data and code. Information on an Xlet is inserted in the AIT by a service provider. If a user selects a service, the receiver can use the information described to indicate to the user whether an Xlet is available for the service. If so, the user can instruct the receiver to download and install the Xlet. At that moment the user can find out what functionality is provided by the Xlet. If the user is dissatisfied, the Xlet can be de-installed.

WO 01/65850 discloses a method for a cable television client device during a power-up sequence to load selected applications into a memory from a cable television server device coupled to the client device.

A document published by Sun Microsystems (RTM) entitled "Java TV API Specification" describes the Java TV application programming interface, including electronic program guides (EPGs) and Xlets.

### SUMMARY OF THE INVENTION

It is an object of the invention to provide a more user friendly method of downloading a program into a broadcast receiver and to provide a more user-friendly broadcast receiver. It is a further object to provide a method of downloading a program into a broadcast receiver that is better capable of dealing with more Xlets and with Xlets that change more frequently.

To meet the object of the invention, the method of downloading a program into a broadcast receiver, wherein a tuner/decoder of the broadcast receiver is operative to selectively tune into at least one of a plurality of broadcast transport streams and to selectively extract at least one service from the transport stream, where each service including at least one selectively receivable service component from a plurality of service component types; at least one service component type representing Xlets that are executable by the broadcast receiver, includes:
retrieving information on Xlets being broadcast via the plurality transport streams;
compiling a guide with Xlets available for receipt based on the retrieved information;
presenting to a user the Xlet guide;
enabling a user to select at least one of the presented Xlets; and
in response to a user selection, causing the tuner/decoder to tune into the transport stream that carries the selected Xlet, and to extract the selected Xlet,
wherein the step of retrieving the information includes causing a tuner/decoder of the broadcast receiver to scan at least one of the plurality of transport streams being broadcast in the system and to extract from information in the transport stream which Xlets are being broadcast via a service of a transport stream.

By presenting the available Xlets in one guide, the user no longer needs to scan through all services/channels to determine whether or not an Xlet is available in conjunction with that channel. It gives the user an overview of the Xlets independent of the transport stream and service/channels in the transport stream actually being selected by the user at that moment. The user is given one point for selecting Xlets to be downloaded/received.

The information on available Xlets is automatically retrieved by the receiver. The receiver compiles the information by scanning through the transport streams to extract all relevant information on Xlets.

As defined in the dependent claim 2, the relevant information is broadcast via a predetermined transport stream or service within the transport stream, to enable quick compilation of the Xlet guide.

As defined in the dependent claim 3, a special Xlet (Xlet-guide Xlet) is downloaded that presents the Xlet guide to the user. The special Xlet may also include the data for the Xlet guide (i.e. information for the user on which Xlets are available and information for the receiver to enable downloading). Preferably, as defined in the dependent claim 4 the Xlet causes the receiver to retrieve the relevant data for the Xlets guide (e.g. by compiling the data by tuning into and decoding the relevant parts of the transport stream or by downloading the data through the Internet). In this way, the Xlet guide stays up-to-date without the user having to update the Xlet-Guide Xlet.

As defmed in the dependent claim 5, the special Xlet is downloaded automatically in response to an instruction of a user. Preferably, the user does not need to search for the Xlet-guide Xlet. The receiver on its own initiative may offer the user the option to install the Xlet, where the receiver comes equipped with all relevant information on downloading the Xlet.

As defined in the dependent claim 6, the Xlet guide is presented according to a user profile. The user may specify a profile directly to the receiver or to a service provider that supplies it electronically to the receiver. The receiver may also learn the profile based on interactions with the user.

As defined in the dependent claim 7, the Xlet guide highlights Xlets that have newly become available. In this context, 'new' means since the last use of the guide or in a predetermined period preceding the current use of the guide (e.g. in the last two weeks). Preferably, the user can set the period within a predetermined range.

These and other aspects of the invention are apparent from and will be elucidated with reference to the embodiments described hereinafter.

### BRIEF DESCRIPTION OF THE DRAWINGS

In the drawings:
Fig. 1 shows a block diagram of a digital broadcast system wherein the invention can be used;
Fig. 2 shows a block diagram of a broadcast receiver for use in the system;
Fig. 3 shows details of processing aspects of the broadcast receiver;
Fig. 4 shows the software/hardware hierarchy in the broadcast receiver; and
Fig. 5 shows an example of a screen generated by the Xlet guide according to the invention.

### DETAILED DESCRIPTION OF THE PREFERRED EMBODIMENT

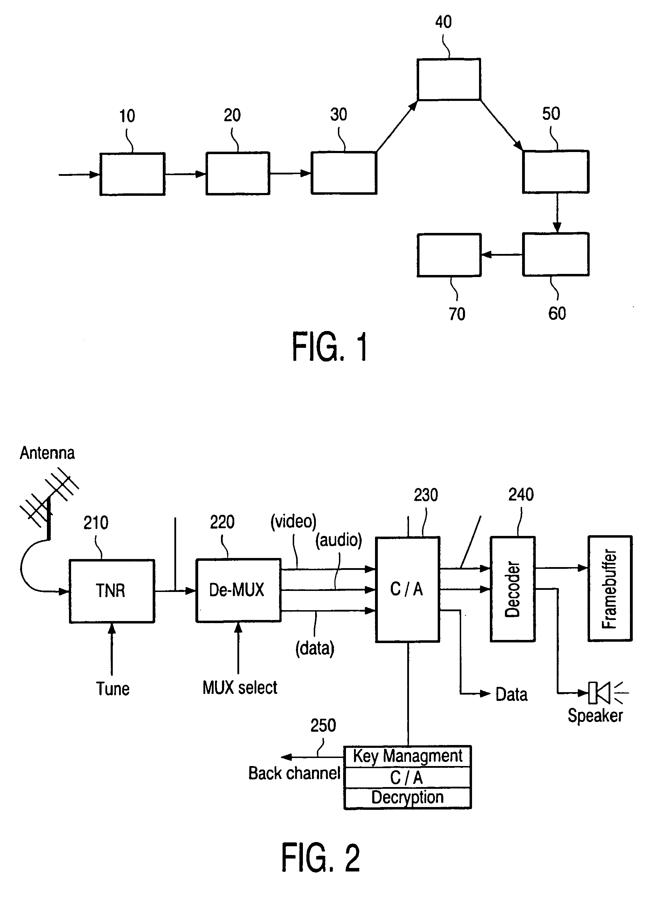

Fig. 1 gives an overview of a digital television system in which the receiver according to the invention can be used. As an example, a system is described wherein the audio/video (A/V) signals are distributed digitally using MPEG-2 compression to compress the A/V signals. The system includes an MPEG-2 compressor 10, usually located in a broadcast centre. The compressor receives a digital signal stream (typically a stream of digitized analog or digital video signals). The original signals are supplied by a service provider. The compressor is connected to a multiplexer and scrambler 20. The multiplexer 20 receives a plurality of further digital signals, assembles the transport stream and supplies compressed signals to a transmitter 30 of the broadcast centre. The signals may be supplied using any suitable form of linkage, including telecommunication links. The transmitter 30 transmits electromagnetic signals via an uplink towards a satellite transponder 40, where they are electronically processed and broadcast via a downlink to an earth-based satellite receiver 50, conventionally in the form of a dish of the end user. The satellite receiver 50 is connected to an integrated receiver/decoder 60. The receiver 60 can be tuned to the various frequency multiplexed transport streams. The decoder part decodes the transport stream into the separate channels/services and can further decode the compressed MPEG-2 signal in such a channel into a signal for use by a rendering device, such as a television 70. Of course, the signal may also be recorded using a tape, optical disc or hard disk recorder or other suitable recorder. The signal may be supplied to the rendering/recording device in an analog or digital form using well-known distribution systems such as CATV cable, or IEEE 1394. For digital distribution only partial decoding of the transport stream is required, where the demultiplexed signals are supplied in the MPEG-2 coding using partial transport streams. The receiver/decoder may be separated into a tuner and a decoder.

It will be understood that the main distribution does not need to take place via satellite. Instead other delivery systems (i.e. the physical medium by which one or more multiplexes are transmitted) may be used, such as terrestrial broadcast, cable transmission, combined satellite/cable. The party that distributes the program via the delivery system is sometimes referred as the network provider. It will also be understood that the receiver/decoder 60 may be integrated into the rendering or recording device.

A typical system operates as a multi-channel system, implying that the multiplexer 20 can handle A/V information received from a number of (parallel) sources and interacts with the transmitter 30 to broadcast the information along a corresponding number of channels or multiplexed into separate transport streams. In addition to A/V signals, messages or applications or any other sort of digital data may be introduced in some or all of these services/channels interlaced with the transmitted digital audio and video information. As such a stream includes one or more services, each with one or more service components. A service component is a mono-media element. Examples of service components are video elementary stream, an audio elementary stream, a Java application (Xlet), or other data type. A transport stream is formed by multiplexing one or more elementary streams and/or data. A service component may be shared by more than one service. To simplify the description, in the remainder of the description it is assumed that an Xlet belongs to only one service.

Fig. 2 shows more details of a typical broadcast receiver. The broadcast receiver includes a tuner 210. The tuner 210 extracts a separate tunable Radio Frequency (RF) band usually resulting in an MPEG2 transport stream. Variable data signals are separated from the constant carrier signal by the de-multiplexer 220 (De-MUX). The results often are audio, video and data outputs. Typically, the video and audio streams are fed through a Conditional Access subsystem 230, which determines access grants and may decrypt data. The decrypted audio and video streams are fed to a Decoder 240, which converts them into signals appropriate for the video and audio rendering or storage devices. A back channel 250 may, but need not be present. If it exists, data is transmitted to a server of a service provider, facilitating interactive applications such as interactive video, e-commerce and so on.

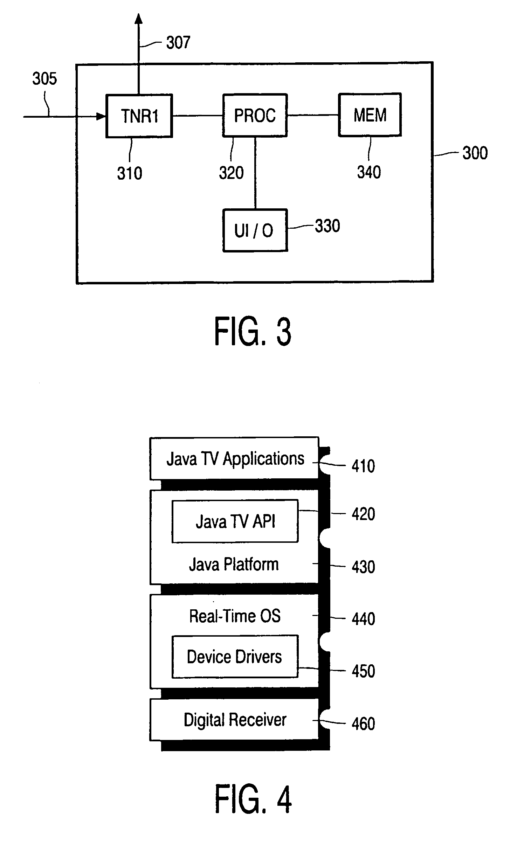

Fig. 3 provides more details of processing aspects of the broadcast receiver. The broadcast receiver 300 includes a receiver/decoder 210, as described in figure 2 under numbers 210, 220 and 240. Usually, the receiver 300 is operated under control of a processor 320, which typically includes an embedded microprocessor or microcontroller. A user interface 330 enables the receiver to interact with the user. The user interface 330 may include any suitable user input means, such as an Infrared receiver for receiving signals from an IR remote control, a keyboard, or a microphone for voice control. For output, also any suitable form may be used, such as using a small LCD display or using the display of a television, or even audible feedback. During normal operation, the user selects a channel/service. Usually this is done by the user indicating a preset number using the user interface 330. Using a table with all installed channels stored in a memory 340, the preset number is translated into a form suitable for controlling the receiver/decoder 310. For a digital system this may be an identification of the channel including the network_id, transport_stream_id and channel_id. Using a network information table (NIT) transmitted in the digital stream, the transport_stream_id can be translated to frequency, enabling the receiver to tune to the transport stream. Based on this information, the receiver/decoder selects one broadcast channel from the plurality of channels being broadcast. The transport streams, which are usually frequency multiplexed (and each contain time-multiplexed services), are received via an input 305. The receiver/decoder extracts the A/V information broadcast via the selected channel and makes the A/V signal and additional information (if applicable) available via an output 307. Instead of via presets, the user may also use an EPG displayed on a television display to select a program and, inherently coupled thereto, a channel.

According to the invention, the broadcast receiver is able to receive executable programs (applications) broadcast in the system and to execute the received programs. Preferably, the application is in a portable, implementation independent code. For the broadcast receiver according to the invention, the application is preferably coded in an interpretative language, like Java. This may be according to the MHP specifications for DVB, according to Sun's Java TV specification, or any other suitable specification. The applications will be referred to as Xlets, which is the name commonly used for Java applications for digital broadcast receivers, such as digital TVs or STBs (set top boxes). It will be understood that for the purpose of the description, Xlet covers also other suitable applications. Xlets are typically small programs that perform simple functions such as electronic programming guides (EPGs), interactive games, enhanced content, managing the broadcast media pipeline, or managing the broadcast data signal. Like conventional Java applets known for personal computers, Xlets are controlled by the software that runs them. In the case of a conventional applet, the underlying software is a browser or the appletviewer tool in combination with an operating system, like Windows. In the case of an Xlet, the underlying software is the digital television receiver or set-top box that supports the Java TV/STB platform. Examples of defined Java platforms are the DVB/MHP Java platform and Sun's Java 2 Micro Edition (J2ME) platform. Such platforms consist of the JVM (Java Virtual Machine) and an optimized version of the Java class library.

Fig. 4 shows the internal architecture within the broadcast receiver. Applications (Xlets) 410 can use the Java API 420 and the packages from the Java Platform layer 430. The Java applications execute at runtime in the application environment's virtual machine (VM). The Java TV/STB API abstracts the control of receiver-specific hardware. The Real Time Operating System (RTOS) 440 provides the system-level support needed to implement the Java VM and the Java packages. In addition, the RTOS and related device-specific libraries control the receiver hardware 460 through a collection of device drivers 450. The software layers 410 to 450 are all executed by the processor 320 of Fig. 3. If required, the tasks may be distributed over several processors. The software layers, including the Xlets, may be stored in the reprogrammable memory 340. Part of it, in particular the RTOS, may also be stored in non-reprogrammable memory, such as ROM.

According to the invention, an Xlet guide is presented to the user showing Xlets available for receipt. A suitable program in the receiver causes the processor 320 to present the guide to a user, e.g. using a display. Such a display may be part of the receiver but may also be externally connected to the receiver. The receiver may be equipped with the program when delivered to the user, e.g. stored in ROM or in the memory 340. The program may also be loaded into the receiver by the user, e.g. from CD-ROM or from the Internet. In a preferred embodiment, the program itself is a special Xlet. This Xlet may be downloaded automatically, without any user intervention. In such a case the receiver is pre-programmed (or otherwise provided with) information required to be able to receive the Xlet and the system should ensure that the Xlet is broadcast regularly. Preferably, the receiver enables the user to receive the special Xlet with a minimum of user interaction, while the user is still in control. For example, during installation of the receiver the user may be presented with the choice to install the special Xlet (Yes/No), where in response to the user indicating that installation is required the special Xlet is automatically installed. This may involve receiving the Xlet through the broadcast system.

The guide may present all available Xlets. Preferably, the program enables the user to control which Xlets are presented and the way in which the Xlets are presented. As an example, the guide may present for each available Xlet certain information, like title, language, date on which the Xlet became available, service provider, the company that developed the guide, type of Xlet (e.g. stand-alone game, interactive game, quality enhancement, home banking, weather forecast, traffic information, EPG (Electronic Program Guide), stock info, traveling, etc. Advantageously, the user can sort the entries in the guide based on at least one (but preferably all categories). As an example, the user can sort the guide on date. The user may also be able to filter (i.e. exclude or include) certain Xlets by specifying preference for the various categories. As an example, the user could specify to only see Xlets that have become available the last two weeks and that or interactive games. For this, preferably a user profile is used. According to the invention, the receiver 300 enables the user to specify a user interest profile using the user interface 330. Alternatively, the user interest profile may be received in any other suitable form. As an example, the user may have indicated its interests to the service provider, e.g. by ticking category boxes on a paper form, by specifying the profile via Internet, or by phoning the customer service department. The service provider can then compile a suitable electronic profile and transmit it to the broadcast receiver (e.g. in one of the transport streams). Preferably, the profile is based on more than one category of preference. Preferred categories are: language (e.g. main language used by the Xlet or the service/channel to which the Xlet belongs), country/area of the broadcast/service provider, and channel type (e.g. main type of programs broadcast via the service/channel to which the Xlet belongs). Advantageously, the user profile is created automatically based on the interests of the user as the receiver concludes from the interaction of the user with the receiver. For example, if the user regularly views game shows, the receiver ensures that the profile includes Xlets for game shows. The profile may then also include Xlets for related categories, such as stand-alone games or multi-user games. Similarly, if the user never views French or German channels, Xlets in those languages are excluded. In itself, automatic creation of profiles is known for other uses. A person skilled in the art will be able to create an optimal automatic profile generator for the Xlet guide according to the invention. Preferably, the Xlet guide is user specific, in the sense that multiple users of the same receiver can have a different guide. The guides (or guide profiles) may all be stored in the memory 340 in association with a user identity. For this, the receiver needs to be able to distinguish between the various users. This may be on an anonymous basis. For example, a user may be identified by a number that the user enters when using the system. The identification may also be based on speaker identification (i.e. identifying a person by its voice) or other biometrical data (e.g. recognition of a user via a camera). In itself, the identity need not be known, it is sufficient to be able to distinguish between the users. However, to let a user feel more comfortable with the system it is preferred to also identify the actual user, for example by letting the user enter his/her name (e.g. via typing it in or speaking it).

Advantageously, the guide emphasizes Xlets that have newly become available. The program may give the user a choice to display all Xlets, only those that have come available since the last time the user has used the guide, or those that have come available in a user-specifiable period.

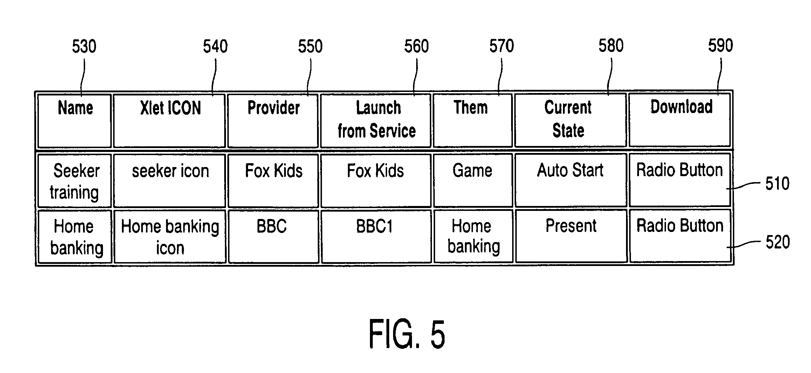

The receiver enables the user to select at least one of the Xlets presented by the guide. This may be done in any suitable form. As an example, the guide could display up to ten rows of available Xlets, where each rows provides some information on the Xlet. The user can then simply select an Xlet by entering a number between 0 and 9 that corresponds to the row with the desired Xlet. The system may enable the user to select more than one Xlet before actually receiving and installing the Xlet. Preferably, the selection is graphically oriented, where the user controls the movement of a cursor over the display that displays the guide (or at least a visible part of it). Moving the cursor over a special selection field of a displayed Xlet and activating the selection (e.g. by pressing a key or mouse button), results in selection of the Xlet. Fig.5 shows an exemplary layout of the guide. Shown are two rows 510 and 520, each providing details on a respective available Xlet. The example shows seven columns 530-590. The first column 530 gives a (descriptive) name of the Xlet. The second column 540 gives a visual representation, preferably in the form of an icon. The icon may be static, i.e. not changing as long as the Xlet is in the guide. It may also be dynamic, for instance refreshed at a certain rate to attract the user's attention and to better visualize the Xlet. For example, each time the guide is used by the user a new icon may be presented. Alternatively, the icon is refreshed at a predetermined rate, e.g. every 10 seconds. A series of icons may be broadcast in association with the Xlet as information on the Xlet. The icons may be generated dynamically by the service provider. As an example, for an Xlet that provides enhanced functionality for a broadcast on the Olympic Games, the service provider may create icons from snapshots of highlights of recent event in the games. Particularly if the Xlet guide itself is an application (Xlet) executed by receiver, such up-to-date icons may also be retrieved on the initiative of the receiver, e.g. via Internet from a predetermined location. Information on the location (e.g. a URL) may be broadcast in association with the Xlet.

Columns 550 and 570 provide further information on the Xlet. In the example, the name of the service provider and a theme of the Xlet are provided. Column 580 shows the state of the Xlet. The state is for information purposes only and usually defined by the broadcast system. As an example, the DVB/MHP system defines the following states:
- AUTOSTART: an Xlet with this status is automatically started if the user selects the corresponding channel/service (assuming that other usual conditions for starting an application, such as enough available resources are also met). Column 560 shows the channel/service that upon selection will result in the corresponding Xlet automatically being loaded. As shown in row 510, the seeker training (scene from Harry Potter) Xlet is provided by Fox Kids and will automatically be launched if the user zaps to the FoxKids channel. Column 590, as described in more detail below, enables a user to also select installation of the corresponding Xlet without the user having to zap to the channel/service. So, by indicating a download for the seeker training Xlet by pressing the radio button in row 510 and column 590, the Xlet will be installed even if the user does not select FoxKids channel for viewing.
- PRESENT: Indicates that the application is present in the service, but is not autostarted.
- DESTROY: Allow the application to destroy itself gracefully when the control code changes from AUTOSTART or PRESET to DESTROY.
- KILL: The destroy method will be called by the application manager when the control code changes from AUTOSTART or PRESET to DESTROY.

Finally, column 590 shows an area/field that enables the user to select the Xlet for downloading. As an example, the column 590 can display a radio button for each respective Xlet, where activation of the button result in selection (and consequently also in receiving) of the corresponding Xlet. Preferably, the field 590 has at least the function of letting a user select the field (similar to pressing an OK button in a graphical user interface known from computers). The field may also function as a toggle. A default value could be that the corresponding Xlet is not selected. Each activation by a user toggles between selected/non-selected (where the graphical representation is adapted to the selected/non-selected state). Preferably, the user can control the default setting, where possible per category. So, a user that likes playing Xlet games may as a default that all new Xlets of this category/theme are selected. Each time the user opens the guide and activates downloading all new selected Xlets are automatically retrieved and installed without any further user intervention.

Once the user has selected one or more Xlets, the receiver ensures that the selected Xlets are received and installed. To achieve this, for each selected Xlet the processor 320 uses the information provided by the service to locate the Xlet in the broadcast digital data. For DVB/MHP, the so-called Program Map Table (PMT) indicates the transport streams that contain an Application Information table (AIT) and the location of the transport stream(s) that transport the application data and code. Information on an Xlet is inserted in the AIT by a service provider. Other digital broadcast system may use other mechanisms to broadcast such information to the receiver. The person skilled in the art will be able to use such information to locate the Xlet in the broadcast transport streams or even in services in the transport stream.

The processor 320 then causes the tuner/decoder 310 to tune into the transport stream that carries the selected Xlet. It ensures that the decoder part decodes the tuned stream sufficiently far to be able to access the service that carries the Xlet and to be able to extract the selected Xlet. The Xlet is then stored, for example in the storage 340, and the operating system ensures that the Xlet can be activated by the user, or is automatically activated, e.g. when the user selects a channel for which the Xlets provides enhanced functionality. In itself receiving, decoding, extracting and installing of an individual Xlet is known to the person skilled in the art.

Although the Xlet guide has been described for selection and receipt of Xlets, it will be appreciated that the functionality of the guide can be extended to also cover management functions with respect to installed Xlets. For example, the guide can also display installed Xlets and show whether or not such Xlets are actively executed at that moment. It can also provide information on the Xlet, such as whether the Xlet will be automatically be removed after execution has finished or that the user needs to actively remove the Xlet. Preferably, the Xlet enables the user to set a period after which the Xlet is automatically removed. Via the guide, the user may be able to de-activate and de-install (remove) Xlets from the receiver. In this way, the user has one point for completely managing Xlets of the receiver. This simplifies operation of the receiver substantially.

The broadcast receiver retrieves information on which Xlets are being broadcast via the system. The information may be supplied to the receiver via a storage medium, such as a smart-card, CD-ROM, etc. Such a medium may be shipped regularly to a user of the system. Preferably, the receiver retrieves the information fully automatic, via a communication system. As an example, the receiver may retrieve it via Internet. To this end, the receiver may be provided with a download address (e.g. a URL) where it can retrieve the information. The receiver may come preprogrammed with such an address, or the user may have to enter such an address for the service provider or network provider of the broadcast system. Preferably, the receiver retrieves the information from the data that is broadcast in the system. Advantageously, the receiver scans through the transport streams to extract all relevant information on Xlets. For DVB/MHP, the receiver first locates the Program Map Table (PMT) and extracts from it the transport streams that contain an Application Information table (AIT). It then scans the transport streams (i.e. it causes the tuner to tune to those streams in turn and partially decode the stream) to extract the AIT. From the AITs, the receiver extracts information on Xlets inserted by a service provider and the location of the transport stream(s) that transport the application data and code. Based on this information, the receiver compiles the Xlet guide. It will be appreciated that certain information does not need to be presented to the user, since it aims to assist the receiver in locating the Xlet in the broadcast transport streams and as such is not directly relevant for the user. Preferably, the Xlet information is transmitted in one data stream to assist the receiver to quickly retrieve the information. For example, this would enable the receiver to retrieve the information as part of the start-up process that is executed each time the user activates the receiver to start viewing.

In a preferred embodiment, a special downloadable application (preferably an Xlet) takes care of presenting the Xlet guide to the user. This makes it possible to easily update the presentation of the guide. For example, visual aspects may be changed; the categories of information that are displayed may be updated, etc. The Xlet may also take care of user configurability of the guide, such as filtering, sorting and profiling in general. The user may need to once select this special Xlet for installation, using a more simple Xlet installation process (bootstrapping). Preferably, during installation the receiver present the user with a choice whether or not to install the Xlet-guide Xlet. The user may also have informed the network provider (or service provider) that it wishes to use this guide. In this case, the network provider can provide such information electronically to the receiver (e.g. on a storage medium or by directly addressing the receiver via the broadcast system). This results in full automatic installation without any further user involvement with the receiver.

A separate application in the receiver, but preferably the same Xlet-guide Xlet as described above, causes the broadcast receiver to retrieve information on Xlets being broadcast via services of the plurality of transport streams. The various ways of automatically collecting such information have been described above. Alternatively, the Xlet-guide Xlet includes the relevant data for the user regarding which Xlets are available (and data to enable the receiver to locate the Xlets in the broadcast streams). This Xlet then needs to refresh itself regularly. This can be done by setting a predetermined life time. At expiry of this lifetime, the Xlet is automatically removed. Shortly before, the system should make a new Xlet available, that is preferably installed automatically without any user intervention.

In a preferred embodiment, the receiver regularly checks whether a new Xlet has become available. For instance, such a check may be performed every couple of minutes (or user configurable period). The Xlet guide preferably highlights Xlets that have newly become available. For example, by presenting recent Xlets first, or by visually distinguishing recent Xlets from older Xlets, e.g. by giving recent Xlets a distinguishing color or by bolding recent Xlets. In an embodiment where the receiver has to scan one or more transport streams in order to retrieve information on Xlets, it is preferred that the receiver includes a second tuner/decoder. This second module can then be used to scan for new Xlets in the background, while the main tuner/decoder is used for viewing. While the second module is not used for scanning for Xlets, it may be used for other purposes.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The words "comprising" and "including" do not exclude the presence of other elements or steps than those listed in a claim. The invention can be implemented by means of hardware comprising several distinct elements, and by means of a suitably programmed computer. Where the system/device/apparatus claims enumerate several means, several of these means can be embodied by one and the same item of hardware. The computer program product may be stored/distributed on a suitable medium, such as optical storage, but may also be distributed in other forms, such as being distributed via the Internet or wireless telecommunication systems.

## Claims

1. A method of downloading a program into a broadcast receiver, wherein a tuner/decoder of the broadcast receiver is operative to selectively tune into at least one of a plurality of broadcast digital transport streams and to selectively extract at least one service from the transport stream, where each service includes at least one selectively receivable service component from a plurality of service component types; at least one service component type representing Xlets that are executable by the broadcast receiver; the method including:
retrieving information on Xlets being broadcast via the plurality transport streams;
compiling a guide with Xlets available for receipt based on the retrieved information;
presenting to a user the Xlet guide;
enabling a user to select at least one of the presented Xlets; and
in response to a user selection, causing the tuner/decoder to tune into the transport stream that carries the selected Xlet, and to extract the selected Xlet;
wherein the step of retrieving the information includes causing a tuner/decoder of the broadcast receiver to scan at least one of the plurality of transport streams being broadcast in the system and to extract from information in the transport stream which Xlets are being broadcast via a service of a transport stream.

2. A method as claimed in claim 1, wherein the step of retrieving the information includes causing a tuner/decoder of the broadcast receiver to extract the information for Xlets available via the plurality of transport streams from one predetermined transport stream.

3. A method as claimed in claim 1, including receiving a predetermined Xlet-Guide Xlet that is operative to cause the broadcast receiver to present the Xlet guide to the user.

4. A method as claimed in claim 3, wherein the Xlet-Guide Xlet is operative to cause the broadcast receiver to retrieve information on Xlets being broadcast via the plurality of transport streams.

5. A method as claimed in claim 3, including the step of automatically downloading the Xlet-Guide Xlet in response to an instruction of a user.

6. A method as claimed in claim 1, including the step of retrieving a user interest profile and presenting the Xlet guide according to a user interest profile.

7. A method as claimed in claim 1, including the step of regularly checking whether a new Xlet has become available, and wherein the step of presenting the Xlet guide includes highlighting Xlets that have newly become available.

8. A computer program product operative to cause a processor to perform the method as claimed in claim 1.

9. A computer program product as claimed in claim 8, wherein the program product is an Xlet.

10. A storage medium including the computer program product as claimed in claim 8.

11. A broadcast receiver (300), including a tuner/decoder (310) for selectively tuning into at least one of a plurality of broadcast digital transport streams and for selectively extracting at least one service from the transport stream, where each service includes at least one selectively receivable service component from a plurality of service component types; at least one service component type representing Xlets that are executable by the broadcast receiver; and a processor (320) for retrieving information on Xlets being broadcast via the plurality transport streams; for compiling a guide with Xlets available for receipt based on the retrieved information; for presenting to a user the Xlet guide; for enabling a user to select at least one of the presented Xlets; and for, in response to a user selection, causing the tuner/decoder to tune into the transport stream that carries the selected Xlet, and to extract the selected Xlet,
wherein the processor (320) retrieves the information by causing the tuner/decoder to scan at least one of the plurality of transport streams being broadcast in the system and to extract from information in the transport stream which Xlets are being broadcast via a service of a transport stream.

## Patentansprüche

1. Verfahren zum Herunterladen eines Programms in einen Rundfunkempfänger, wobei ein Tuner/Decoder des Rundfunkempfängers derart wirksam ist, dass dieser auf wenigstens einen Strom einer Anzahl ausgesendeter digitaler Transportströme selektiv abstimmt und wenigstens einen Sender aus dem Transportstrom selektiv extrahiert, wobei jeder Sender wenigstens einen selektiv empfangbaren Senderanteil aus einer Anzahl Senderanteiltypen umfasst; wobei wenigstens ein Senderanteiltyp, der Xlets darstellt, die durch den Senderempfänger durchführbar sind; wobei das Verfahren die nachfolgenden Verfahrensschritte umfasst:
- das Ermitteln von Information über Xlets, die über die vielen Transportströme gesendet werden,
- das Kompilieren eines Führers mit Xlets, die für Empfang verfügbar sind, und zwar auf Basis der ermittelten Information,
- das Präsentieren des Xletführers an einen Benutzer,
- das Ermöglichen, dass ein Benutzer wenigstens ein Xlet der präsentierten Xlets selektiert; und
- in Reaktion auf eine Selektion durch den Benutzer dafür Sorgen, dass der Tuner/Decoder auf den Transportstrom abstimmt, der das selektierte Xlet trägt, und dass das selektierte Xlet extrahiert wird,
wobei der Verfahrensschritt der Ermittlung der Information umfasst, dass dafür gesorgt wird, dass ein Tuner/Decoder des Senderempfängers wenigstens einen Transportstrom der vielen Transportströme abtastet, die in dem System gesendet werden und dass aus der Information in dem Transportstrom extrahiert wird, welche Xlets über einen Sender eines Transportstroms gesendet worden sind.

2. Verfahren nach Anspruch 1, wobei der Verfahrensschritt der Ermittlung der Information umfasst, dass dafür gesorgt wird, dass ein Tuner/Decoder des Senderempfängers die Information für Xlets extrahiert, die über die vielen Transportströme verfügbar sind, und zwar aus einem vorbestimmten Transportstrom.

3. Verfahren nach Anspruch 1, wobei dieses Verfahren das Empfangen eines vorbestimmten Xletführer-Xlets umfasst, das wirksam ist um dafür zu sorgen, dass der Senderempfänger dem Benutzer den Xletführer präsentiert.

4. Verfahren nach Anspruch 3, wobei das Xletführer-Xlet wirksam ist um dafür zu sorgen, dass der Senderempfänger Information über Xlets ermittelt, die über die vielen Transportströme gesendet werden.

5. Verfahren nach Anspruch 3, wobei das Verfahren den Verfahrensschritt der automatischen Herunterladung des Xletführer-Xlets umfasst, und zwar in Reaktion auf eine Instruktion eines Benutzers.

6. Verfahren nach Anspruch 1, wobei das Verfahren den Verfahrensschritt der Ermittlung eines Benutzerinteressenprofils sowie die Präsentation des Xletführers entsprechend einem Benutzerinteressenprofil umfasst.

7. Verfahren nach Anspruch 1, wobei das Verfahren den Verfahrensschritt umfasst, nach dem auf regelmäßige Weise überprüft wird, ob ein neues Xlet verfügbar geworden ist, und wobei der Verfahrensschritt der Präsentation des Xletführers das Hervorheben derjenigen Xlets umfasst, die kürzlich verfügbar geworden sind.

8. Computerprogrammprodukt, wirksam um dafür zu sorgen, dass ein Prozessor das Verfahren nach Anspruch 1 durchführt.

9. Computerprogrammprodukt nach Anspruch 8, wobei das Programmprodukt ein Xlet ist.

10. Speichermedium mit dem Computerprogrammprodukt nach Anspruch 8.

11. Senderempfänger (300) mit einem Tuner/Decoder (310) zum selektiven Abstimmen auf wenigstens einen Transportstrom einer Anzahl gesendeter digitaler Transportströme und zum selektiven Extrahieren wenigstens eines Senders aus dem Transportstrom, wobei jeder Sender wenigstens einen selektiv empfangbaren Senderanteil aus einer Anzahl Senderanteiletypen umfasst; wobei wenigstens ein Senderanteiltyp Xlets darstellt, die von dem Senderempfänger durchführbar sind; und mit einem Prozessor (320) zum Ermitteln von Information über Xlets, die über die vielen Transportströme gesendet werden; zum Kompilieren eines Führers mit Xlets, die für Empfang verfügbar sind, und zwar auf Basis der ermittelten Information; zum Präsentieren des Xletführers an einen Benutzer; zum Ermöglichen, dass ein Benutzer wenigstens ein Xlet der präsentierten Xlets selektieren kann; und um, in Reaktion auf eine Selektion durch den Benutzer, dafür zu sorgen, dass der Tuner/Decoder auf den Transportstrom abstimmt, der das selektierte Xlet trägt, und zum Extrahieren des selektierten Xlets,
wobei der Prozessor (320) die Information **dadurch** ermittelt, dass er dafür sorgt, dass der Tuner/Decoder wenigstens einen Transportstrom der vielen Transportströme abtastet, die in dem System gesendet werden und dass er aus Information in dem Transportstrom extrahiert, welche Xlets über einen Sender eines Transportstroms gesendet werden.

## Revendications

1. Procédé de téléchargement d'un programme dans un récepteur de radiodiffusion, dans lequel un tuner/décodeur du récepteur de radiodiffusion est opérationnel pour accorder sélectivement dans au moins un d'une pluralité de trains de transport numériques de radiodiffusion et pour extraire sélectivement du train de transport au moins un service où chaque service comprend au moins une composante de service sélectivement recevable en provenance d'une pluralité de types de composante de service; au moins un type de composante de service représentant des Xlets qui sont exécutables par le récepteur de radiodiffusion; le procédé comprenant les étapes suivantes consistant à:
rechercher de l'information relative à des Xlets qui sont radiodiffusés par le biais de la pluralité de trains de transport;
compiler un guide avec des Xlets qui sont disponibles pour la réception sur la base de l'information recherchée;
présenter le guide de Xlets à un utilisateur;
permettre à un utilisateur de sélectionner au moins un des Xlets présentés; et
effectuer, en réaction à une sélection d'utilisateur, que le tuner/décodeur accorde dans le train de transport qui contient le Xlet sélectionné et qu'il extrait le Xlet sélectionné;
dans lequel l'étape consistant à rechercher l'information comprend le fait d'effectuer qu'un tuner/décodeur du récepteur de radiodiffusion balaie au moins un de la pluralité de trains de transport qui sont en cours d'être radiodiffusés dans le système et extrait de l'information dans le train de transport quels Xlets sont en cours d'être radiodiffusés par le biais d'un service d'un train de transport.

2. Procédé selon la revendication 1, dans lequel l'étape consistant à rechercher l'information comprend le fait d'effectuer qu'un tuner/décodeur du récepteur de radiodiffusion extrait d'un train de transport prédéterminé l'information pour les Xlets qui sont disponibles par le biais de la pluralité de trains de transport.

3. Procédé selon la revendication 1, comprenant la réception d'un Xlet-guide de Xlets qui est opérationnel pour effectuer que le récepteur de radiodiffusion présente le guide de Xlets à l'utilisateur.

4. Procédé selon la revendication 3, dans lequel le Xlet-guide de Xlets est opérationnel pour effectuer que le récepteur de radiodiffusion recherche de l'information relative à des Xlets qui sont en cours d'être radiodiffusés par le biais de la pluralité de trains de transport.

5. Procédé selon la revendication 3, comprenant l'étape consistant à télécharger automatiquement le Xlet-guide de Xlets en réaction à une instruction d'un utilisateur.

6. Procédé selon la revendication 1, comprenant l'étape consistant à rechercher un profil d'intérêt d'utilisateur et à présenter le guide de Xlets selon un profil d'intérêt d'utilisateur.

7. Procédé selon la revendication 1, comprenant l'étape consistant à vérifier régulièrement si un nouveau Xlet est devenu disponible et dans lequel l'étape consistant à présenter le guide de Xlets comprend une mise en évidence de Xlets qui sont nouvellement devenus disponibles.

8. Produit de programme informatique qui est opérationnel pour effectuer qu'un processeur exécute le procédé selon la revendication 1.

9. Produit de programme informatique selon la revendication 8, dans lequel le produit de programme est un Xlet.

10. Support de stockage comprenant le produit de programme informatique selon la revendication 8.

11. Récepteur de radiodiffusion (300) comprenant un tuner/décodeur (310) pour accorder sélectivement dans au moins un d'une pluralité de trains de transport numériques de radiodiffusion et pour extraire sélectivement du train de transport au moins un service où chaque service comprend au moins une composante de service sélectivement recevable en provenance d'une pluralité de types de composante de service; au moins un type de composante de service représentant des Xlets qui sont exécutables par le récepteur de radiodiffusion; et un processeur (320) pour rechercher de l'information relative à des Xlets qui sont radiodiffusés par le biais de la pluralité de trains de transport; pour compiler un guide avec des Xlets qui sont disponibles pour la réception sur la base de l'information recherchée; pour présenter le guide de Xlets à un utilisateur; pour permettre à un utilisateur de sélectionner au moins un des Xlets présentés; et pour effectuer, en réaction à une sélection d'utilisateur, que le tuner/décodeur accorde dans le train de transport qui contient le Xlet sélectionné et extrait le Xlet sélectionné, dans lequel le processeur (320) recherche l'information en effectuant que le tuner/décodeur balaie au moins un de la pluralité de trains de transport qui sont radiodiffusés dans le système et extrait de l'information dans le train de transport quels Xlets sont en cours d'être radiodiffusés par le biais d'un service d'un train de transport.
